# EUROPEAN PATENT APPLICATION

(11) **EP 2 543 838 A1**
(43) Date of publication of application: **09.01.2013**
(21) Application number: 10846935.4
(22) Date of filing: 02.03.2010
(51) Int. Cl.: F01N 3/20, F01N 3/24, F01N 3/36

(54) **EXHAUST EMISSION CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: TSUJIMOTO, Kenichi, Toyota-shi Aichi 471-8571 (JP)
(74) Representative: Winter, Brandl, Fürniss, Hübner, Röss, Kaiser, Polte - Partnerschaft
(86) International application number: PCT/JP2010/001428
(87) International publication number: WO 2011/108024

(57) **Abstract**

An exhaust purifying apparatus for an internal combustion engine according to the present invention comprises an exhaust purifying catalyst provided in an exhaust passage, a burner device provided upstream of the exhaust purifying catalyst and generating a heated gas for heating the exhaust purifying catalyst, the burner device including at least a glow plug and a fuel injection nozzle injecting fuel toward the glow plug, and a heat spot member as a heat accumulator provided downstream of the burner device and upstream of the exhaust purifying catalyst.

## Description

### Technical Field

The present invention relates to an exhaust purifying apparatus for an internal combustion engine, and particularly to an exhaust purifying apparatus for an internal combustion engine in which a burner device for accelerating warming-up of an exhaust purifying catalyst is provided in an exhaust passage.

### Background Art

There are some cases where in an exhaust passage in an internal combustion engine, a burner device is provided upstream of an exhaust purifying catalyst, a heated gas generated in the burner device is used to heat the exhaust purifying catalyst and accelerate warming-up of the exhaust purifying catalyst (for example, refer to PTL 1).

This type of exhaust purifying apparatus has a problem that the high-temperature heated gas generated in the burner device makes contact with an inner wall of the exhaust passage prior to reaching the exhaust purifying catalyst, which draws heat from the heated gas to lower a temperature thereof.

Therefore an object of the present invention is to provide an exhaust purifying apparatus for an internal combustion engine which can suppress a reduction in temperature of a heated gas generated in a burner device and supply the heated gas to an exhaust purifying catalyst downstream of the burner device.

### Citation List

### Patent Literature

PTL 1: Japanese Patent Laid-Open No. 2001-107721

### Summary of Invention

According to an aspect of the present invention, there is provided an exhaust purifying apparatus for an internal combustion engine comprising, an exhaust purifying catalyst provided in an exhaust passage in the internal combustion engine, a burner device provided upstream of the exhaust purifying catalyst and generating a heated gas for heating the exhaust purifying catalyst, the burner device including at least a glow plug and a fuel injection nozzle injecting fuel toward the glow plug, and a heat spot member as a heat accumulator provided downstream of the burner device and upstream of the exhaust purifying catalyst.

Preferably the burner device further comprises a dispersing member provided downstream of the glow plug for dispersing the heated gas.

Preferably there is further provided a second heat spot member as a second heat accumulator provided downstream of the glow plug and upstream of the dispersing member.

Preferably a heat capacity of the heat spot member is smaller than that of the second heat spot member.

Preferably the second heat spot member is arranged at such a position that fuel injected from the fuel injection nozzle is directly collided therewith.

Preferably the second heat spot member is arranged in the vicinity of the glow plug such that emitted heat from the glow plug is transmitted thereto.

Preferably the heat spot member comprises an exhaust temperature sensor, wherein at least one of the burner device and an exhaust gas flow rate is controlled based upon a detection value of the exhaust temperature sensor.

Preferably the heat spot member comprises a glow plug.

Preferably the exhaust purifying apparatus further comprises exhaust flow rate reducing means for reducing an exhaust gas flow rate upon operation of the burner device.

Preferably the exhaust purifying apparatus further comprises a turbocharger provided upstream of the burner device, and turbo flow rate reducing means for reducing an exhaust gas flow rate passing through the turbocharger upon operation of the burner device.

According to the present invention, the exhaust purifying apparatus achieves an excellent effect of being capable of suppressing a reduction in temperature of a heated gas generated in the burner device and supplying the heated gas to the exhaust purifying catalyst downstream of the burner device.

### Brief Description of Drawings

Fig. 1 is a diagram schematically showing an internal combustion engine according to an embodiment of the present invention;
Fig. 2 is a schematic diagram showing a major part of a first modification;
Fig. 3 is a schematic diagram showing a major part of a second modification;
Fig. 4 is a schematic diagram showing a major part of a third modification;
Fig. 5 is a schematic diagram showing a major part of a fourth modification;
Fig. 6A is a schematic diagram showing a major part of a fifth modification;
Fig. 6B is a cross section taken along line VIB - VIB in Fig. 6A;
Fig. 7 is a schematic diagram showing a major part of a sixth modification;
Fig. 8 is a schematic diagram showing a major part of a seventh modification;
Fig. 9 is a schematic diagram showing a major part of an eighth modification; and
Fig. 10 is a schematic diagram showing a major part of a ninth modification.

### Description of Embodiments

Hereinafter, an embodiment of the present invention will be explained with reference to the accompanying drawings. In the following explanation, "upstream side" and "downstream side" may be respectively called as "front" and "rear".

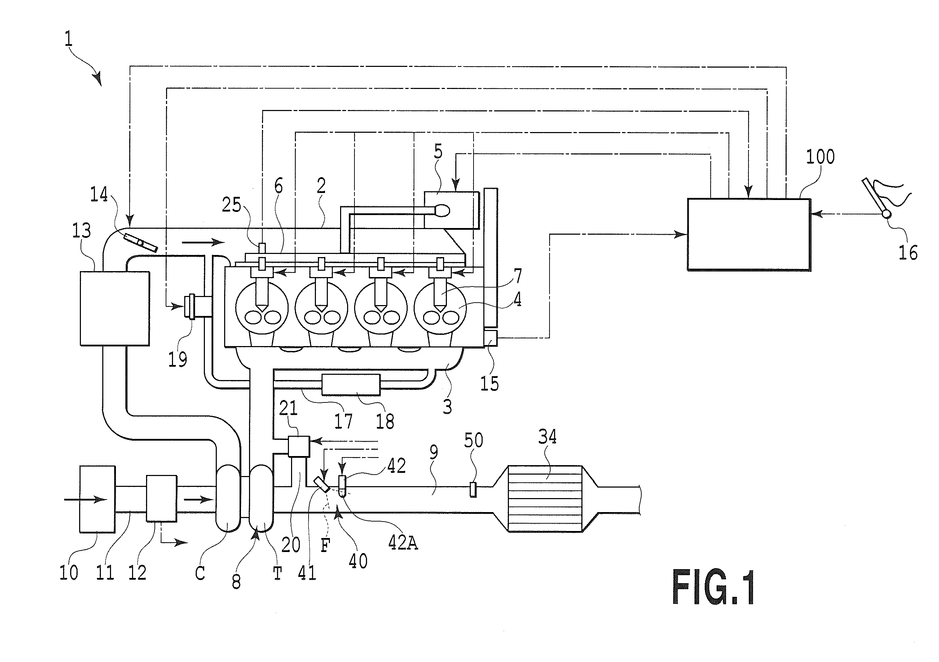

Fig. 1 schematically shows an internal combustion engine according to an embodiment of the present invention. At 1 is indicated a multi-cylinder compression ignition type of internal combustion engine, that is, a diesel engine, at 2 is indicated an intake manifold communicated with intake ports, and at 4 are indicated combustion chambers each defined by a cylinder and a piston. In the present embodiment, fuel supplied from a fuel tank (not shown) to a high-pressure pump 5 is supplied under pressures to a common rail 6 by the high-pressure pump 5 to be accumulated in a high-pressure state, and the high-pressure fuel in the common rail 6 is directly injected and supplied into the combustion chamber 4 from an injector 7. The structure of the diesel engine is not limited to a type of engine equipped with the common rail type of fuel injection apparatus.

Intake air introduced into an intake passage 11 from an air cleaner 10 passes through an air flow meter 12, a compressor C in a turbocharger 8, an intercooler 13, and a throttle valve 14 in that order, and reaches to the intake manifold 2. The air flow meter 12 is a sensor for detecting an intake air quantity. The throttle valve 14 is of an electronically controlled type.

On the other hand, an exhaust gas from each combustion chamber 4 flows in an exhaust passage 9 and is then discharged to an atmosphere. An upstream end of the exhaust passage 9 is formed of an exhaust manifold 3. A turbine T in the turbocharger 8 is provided halfway through the exhaust passage 9. A bypass passage 20 bypassing the turbine T and a waist gate valve 21 opening/closing the bypass passage 20 are provided.

The engine 1 includes an EGR apparatus. The EGR apparatus is provided with an EGR passage 17 for circulating an exhaust gas in the exhaust manifold 3 to the intake passage 11, an EGR cooler 18 for cooling an EGR gas flowing in the EGR passage 17, and an EGR valve 19 for adjusting a flow rate of the EGR gas.

An exhaust purifying catalyst 34 is provided downstream of the turbine T. The exhaust purifying catalyst 34 is formed of an oxidation catalyst for oxidizing unburned ingredients (CO, HC) in the exhaust gas for purification. A particulate filter (hereinafter, called DPF) and a NOx catalyst (any of them is not shown) are serially provided downstream of the oxidation catalyst. The DPF traps particles (PM and particulate) in the exhaust gas, and the NOx catalyst reduces NOx in the exhaust gas for purification. The DPF has a catalyst made of noble metals, and successively oxidizes and burns the trapped particles. The NOx catalyst may be formed of an occlusion reduction type or a selective reduction type.

The catalysts carried on the DPF and the NOx catalyst respectively constitute the exhaust purifying catalysts according to the present invention. That is, in the present embodiment, a sum of three exhaust purifying catalysts is provided. However, the number or kind of the exhaust purifying catalyst is arbitrarily determined and may be one. Particularly in a case of a spark ignition type of internal combustion engine (gasoline engine), the exhaust purifying catalyst may be formed of a three-way catalyst.

A burner device 40 is provided upstream of the exhaust purifying catalyst 34. Particularly the burner device 40 is disposed in a position immediately after the turbine T and in an upstream position spaced by a predetermined distance from the exhaust purifying catalyst 34.

The burner device 40 generates a heated gas and supplies the generated heated gas to the downstream exhaust purifying catalyst 34 to maintain and accelerate warming-up and an active state of the exhaust purifying catalyst 34. The burner device 40 includes a fuel injection nozzle 41 and a glow plug 42 respectively arranged from the upstream side.

Upon operation of the burner device 40, the glow plug 42 is energized and fuel F is injected and supplied from the fuel injection nozzle 41 toward a heat portion 42A in a front end of the glow plug 42. Then the injected fuel is ignited and burned by the glow plug 42 to generate a high-temperature heated gas including flames.

The heated gas is supplied to the exhaust purifying catalyst 34, thus enabling the warming-up and the active state of the exhaust purifying catalyst 34 to be maintained and accelerated. Particularly the burner device 40 is advantageous in a point of improving cold emissions immediately after a cold start of the engine.

Preferably the generated heated gas reaches the exhaust purifying catalyst 34 while being mixed with the exhaust gas (including oxygen) in the circumference thereof as much as possible. This is because otherwise such a temperature distribution occurs that a temperature only in a radial center side of the exhaust purifying catalyst 34 becomes high. Therefore a mixing section of a predetermined distance is required between the burner device 40 and the exhaust purifying catalyst 34. It is also preferable to provide the burner device 40 immediately after the turbine T as in the case of the present embodiment. This is because a swirl component of the exhaust gas discharged from the turbine T can be used for the mixing between the heated gas and the exhaust gas to some extent.

The engine 1 is provided with an electronic control unit (hereinafter, called ECU) 100 as control means. The ECU 100 includes a CPU, a ROM, a RAM, input/output ports, a storage device and the like. The ECU 100 controls the injectors 7, the high-pressure pump 5, the throttle valve 14, the fuel injection nozzle 14, the glow plug 42 and the like in such a manner that desired engine control is performed based upon detection values of various sensors and the like. The aforementioned air flow meter 12 is connected to the ECU 100 as one of the sensors.

A crank angle sensor 15, an accelerator opening sensor 16, and a common rail pressure sensor 25 are connected to the ECU 100. The crank angle sensor 15 outputs a crank pulse signal to the ECU 100 upon rotation of a crank shaft. The ECU 100 detects a crank angle of the engine 1 based upon the crank pulse signal, and calculates a rotational speed of the engine 1. The accelerator opening sensor 16 outputs a signal corresponding to an opening degree of an accelerator pedal (accelerator opening) operated by a user to the ECU 100. The common rail pressure sensor 25 outputs a signal corresponding to a fuel pressure (common rail pressure) in the common rail 6 to the ECU 100.

As shown in Fig. 1, a heat spot member 50 as a heat accumulator or a heat reservoir is provided in the exhaust passage 9 downstream of the burner device 40 and upstream of the exhaust purifying catalyst 34. The heat spot member 50 is made of metallic wire rod, shafting, pipe material or structure, or the like disposed in the exhaust passage 9. In a case of the present embodiment, the heat spot member 50 is provided immediately before the exhaust purifying catalyst 34 and radially extends toward the center side from the inner wall of the exhaust passage 9. The heat spot member 50 is structured to receive heat from the heated gas or the exhaust gas to become higher in temperature as compared to the inner wall in the exhaust passage 9 (or exhaust conduit), and to maintain the high temperature state.

Until the generated heated gas reaches the exhaust purifying catalyst 34, the heated gas burns while mixing with the circumferential exhaust gas. However, the burning in the exhaust gas, which is different from the combustion in the in-cylinder combustion chamber 4, is performed on a condition where the pressure and the temperature are lower, therefore tending to be unstable. Since the inner wall temperature in the exhaust passage is low, when the heated gas is stirred in the mixing process and collides with the inner wall in the exhaust passage, the temperature of the heated gas is rapidly reduced, so that the flame contained in the heated gas tends to dissolve.

However, if the heat spot member 50 is provided as in the present embodiment, unburned ingredients (particularly HC) contained in the heated gas can be re-burned by the heat spot member 50. Therefore the temperature of the heated gas can be maintained or re-increased as highly as possible. In consequence, the burning characteristics of the heated gas can be improved, and at the same time, the sufficiently high-temperature heated gas can be supplied to the exhaust purifying catalyst 34 to improve warming-up performance of the exhaust purifying catalyst 34.

Next, some modifications will be explained based upon the basic example explained above.

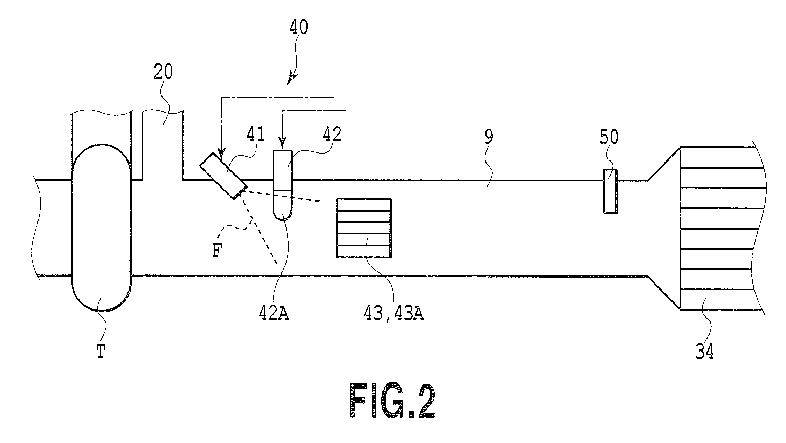

In a first modification shown in Fig. 2, the burner device 40 further includes a dispersing member 43 downstream of the glow plug 42 for dispersing the heated gas. In the illustrated example, the dispersing member 43 is formed of a cylindrical oxidation catalyst 43A. The oxidation catalyst 43A is sized to occupy a part of a cross-sectional area of the exhaust passage 9, and is fixed in the central portion of the exhaust passage 9 in a floating state by a support member (not shown).

When the glow plug 42 is energized and fuel F is injected from the fuel injection nozzle 41 upon operation of the burner device 40, the heated gas is generated by ignition of the injected fuel. The heated gas is introduced to the oxidation catalyst 43A, wherein unburned ingredients in the heated gas are further oxidized and burned. Therefore the heated gas of the higher temperature as compared to the basic example can be generated. In addition, since a speed of the heated gas is lowered at the time the heated gas passes through the oxidation catalyst 43A, the heated gas can be dispersed immediately after it is out of the oxidation catalyst 43A. Therefore the mixing performance of the heated gas can be improved.

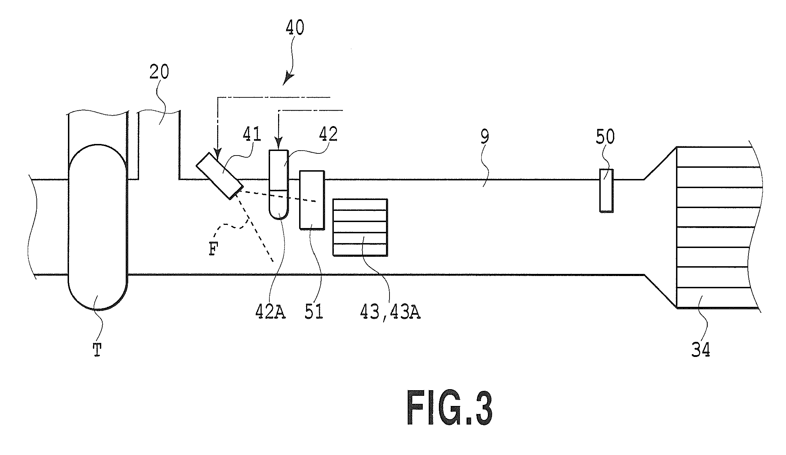

In a second modification shown in Fig. 3, a second heat spot member 51 as a second heat accumulator or heat reservoir is provided downstream of the glow plug 42 and upstream of the dispersing member 43 (oxidation catalyst 43A) in the first modification (Fig. 2). The second heat spot member 51 is also made of metallic wire rod, shafting, pipe material or structure, or the like disposed in the exhaust passage 9. The second heat spot member 51 is also structured to become higher in temperature as compared to the inner wall in the exhaust passage 9, and to maintain the high temperature state. In the illustrated example, the second heat spot member 51 radially extends from the inner wall in the exhaust passage 9 toward the center side thereof.

The second heat spot member 51 is arranged in such a position that fuel F injected from the fuel injection nozzle 41 is directly collided therewith. In this manner, the injected fuel F can be oxidized and burned also by the second heat spot member 51 to improve the combustion performance.

The second heat spot member 51 is arranged in the vicinity of the glow plug 42 such that emitted heat or radiation heat from the glow plug 42 is transmitted thereto. In a case of the illustrated example, the second heat spot member 51 is arranged immediately after the heat portion 42A in the glow plug 42 and directly receives the fuel F which has not been collided with the glow plug 42. By thus arranging the second heat spot member 51 in the vicinity of the glow plug 42, the second heat spot member 51 can be heated by the emitted heat from the glow plug 42 in addition to heat received from the heated gas and the exhaust gas, thus improving the temperature maintaining characteristics of the second heat spot member 51.

Here, a heat capacity of the downstream heat spot member 50 is made smaller than that of the second heat spot member 51. In other words, the heat capacity of the second heat spot member 51 is larger than that of the downstream heat spot member 50. The reason is as follows.

Since the downstream heat spot member 50 is used for re-burning the heated gas or increasing a temperature thereof before or immediately before supplying the heated gas to the exhaust purifying catalyst 34, it is preferable that the downstream heat spot member 50 itself is quickly increased in temperature. Therefore the heat capacity of the downstream heat spot member 50 is preferably small. On the other hand, since the second heat spot member 51 tends to be cooled by losing heat when injected fuel F is collided therewith, it is preferable that the heat capacity thereof is large for controlling its cooling.

By thus defining a magnitude of the heat capacity, preferable characteristics suitable for the function of each heat spot member can be defined.

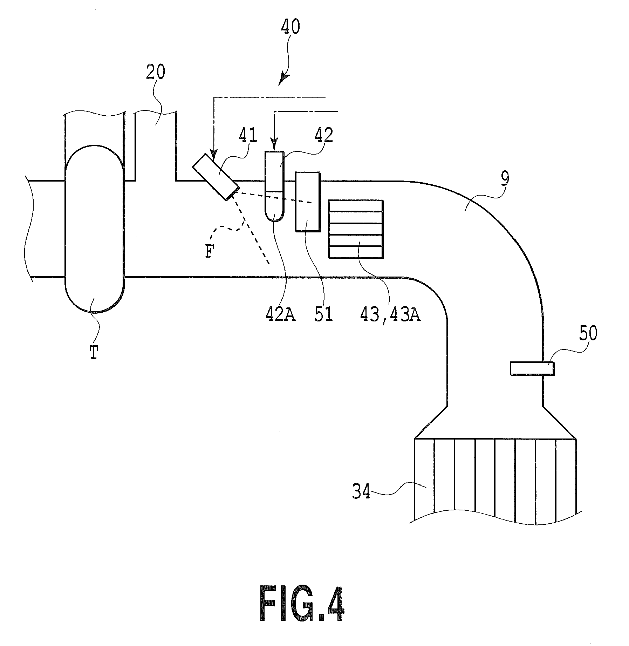

Next, in a third modification shown in Fig. 4, the exhaust passage 9 between the dispersing member 43 (oxidation catalyst 43A) and the heat spot member 50 in the second modification (Fig. 3) is curved at a predetermined angle (90° in the illustrated example). When the exhaust passage 9 is thus curved, the flowing direction of each of the heated gas and the exhaust gas changes at the corresponding curved part, making it possible to furthermore accelerate the mixing and the disturbance of both.

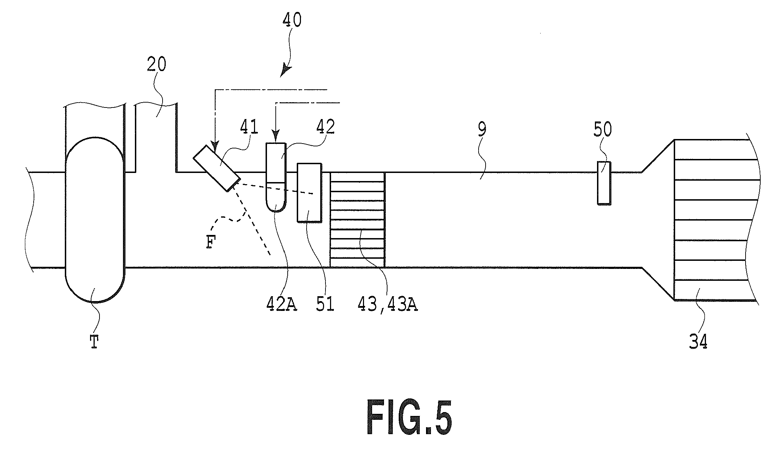

In a fourth modification shown in Fig. 5, the oxidation catalyst 43A as the dispersing member 43 in the second modification (Fig. 3) is sized to occupy all the cross-sectional area of the exhaust passage 9. With this structure also, the heated gas can be more dispersed as compared to the basic example, accelerating the disturbance and mixing thereof.

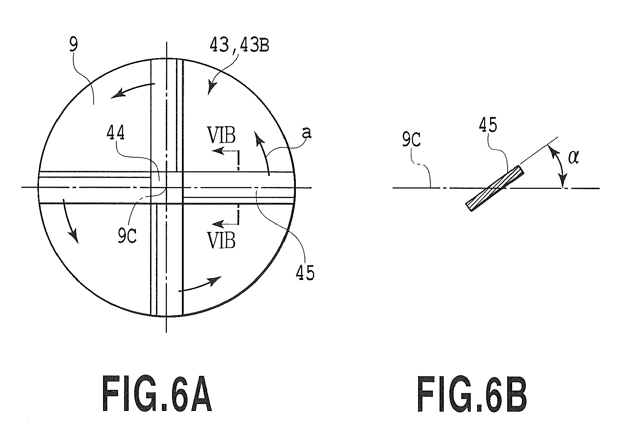

In a fifth modification shown in Fig. 6A and Fig. 6B, a swirl device 43B is used as the dispersing member 43 instead of the oxidation catalyst 43A. Fig. 6A is a diagram showing the exhaust passage 9 as viewed from the upstream side in the direction of a center axis 9C thereof, and Fig. 6B is a cross section taken along line VIB - VIB in Fig. 6A.

The swirl device 43B comprises a central boss 44 arranged coaxially with the center axis 9C of the exhaust passage 9, and a plurality of inclined fins 45 (four fins in the illustrated example) radially extending from the central boss 44 to the inner wall of the exhaust passage 9. Each inclined fin 45 is inclined at a predetermined angle α to the center axis 9C of the exhaust passage 9 as shown in Fig. 6B.

According to this swirl device 43B, when the heated gas and the exhaust gas pass through the inclination fins 45 in the direction of the center axis 9C, the swirl flow is generated as shown in an arrow a in Fig. 6A. Therefore the heated gas can be dispersed by use of the swirl flow, and at the same time, the mixing of the heated gas with the exhaust gas can be accelerated.

The dispersing member 43 may be further formed of various devices and structures. For example, a simple bored plate, a mesh plate, and a rotation driving fan, and the like may be adopted.

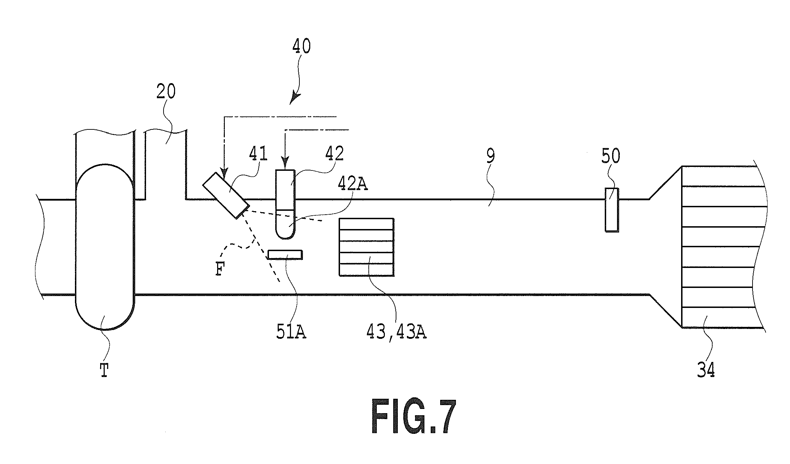

In a sixth modification shown in Fig. 7, a second plate heat spot member 51A extending in an axial direction of the exhaust passage 9 is used instead of the second heat spot member 51 radially extending shown in the second modification (Fig. 3). The second plate heat spot member 51A is arranged in the vicinity of the heat portion 42A of the glow plug 42 and right under it in its axial direction. Also with this structure, as similar to the second modification, injected fuel F is directly collided with the second heat spot member 51A, and emitted heat from the glow plug 42 can be transmitted to the second heat spot member 51A. A point where the heat capacity of the second heat spot member 51A is made larger than that of the downstream heat spot member 50 is the same as the above.

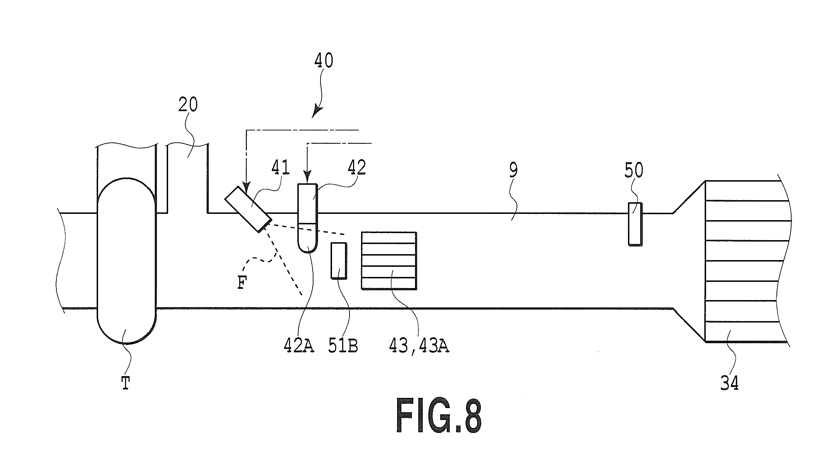

In a seventh modification shown in Fig. 8, a second cylindrical heat spot member 51B, a center axis of which is positioned in parallel with the axial direction of the exhaust passage 9, is used instead of the second heat spot member 51 radially extending shown in the second modification (Fig. 3). The second cylindrical heat spot member 51B is, as similar to the second modification, arranged in the vicinity of and downstream of the heat portion 42A of the glow plug 42 and in a position where injected fuel F is collided therewith. The heat capacity thereof is made larger than that of the downstream heat spot member 50.

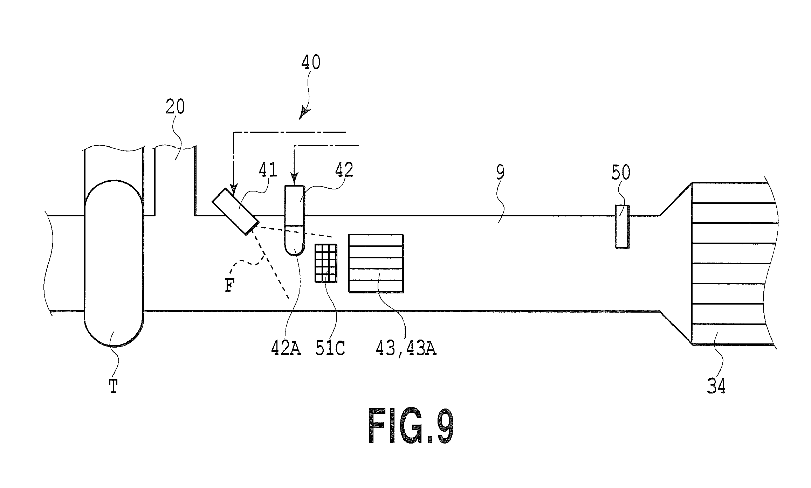

In an eighth modification shown in Fig. 9, a second latticed heat spot member 51C is used instead of the second heat spot member 51 radially extending shown in the second modification (Fig. 3). The second heat spot member 51C is formed in a cylindrical shape as a whole by metallic wire rods, and is formed in a lattice shape by a combination of a plurality of vertical and lateral wire rods. The center axis of the cylinder is, as similar to the seventh modification (Fig. 8), positioned in parallel with the axial direction of the exhaust passage 9, and is positioned coaxially in the illustrated example. The second heat spot member 51C is, as similar to the second modification, arranged in the vicinity of and downstream of the heat portion 42A of the glow plug 42 and in a position where injected fuel F is collided therewith. The heat capacity thereof is made larger than that of the downstream heat spot member 50.

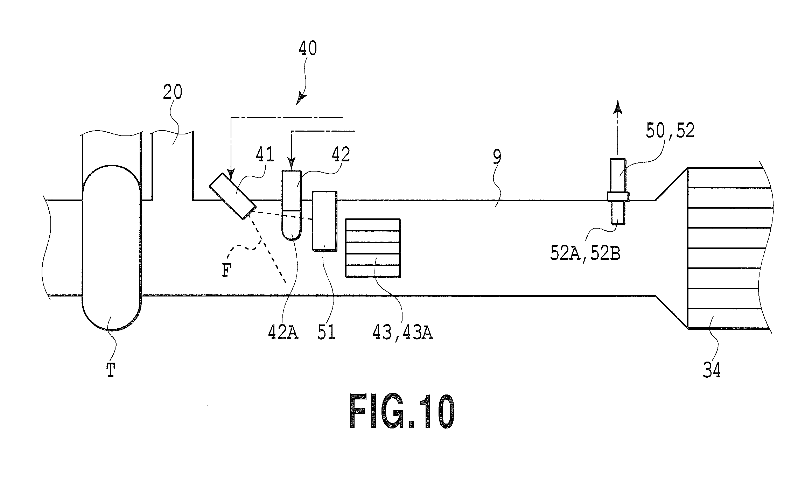

In a ninth modification shown in Fig. 10, the heat spot member 50 is formed by an exhaust temperature sensor 52 instead of the downstream heat spot member 50 formed of the wire rods and the like shown in the second modification (Fig. 3). That is, a detection element portion 52A positioned in a front end portion of the exhaust temperature sensor 52 is positioned inside the exhaust passage 9, and the detection element portion 52A forms the substantial heat spot member 50. The detection element portion 52A includes an inside detection element (not shown) and a cover 52B for covering it from an outside.

A signal representative of an exhaust temperature detected by the exhaust temperature sensor 52 is sent to the ECU 100, and the ECU 100 controls the burner device 40 based upon the detection value. That is, when the detection value of the exhaust temperature sensor 52 is lower than a predetermined temperature, the ECU 100 energizes (turns ON) the glow plug 42 and controls the fuel injection nozzle 41 to be in an operating state and to perform the fuel injection. On the other hand, when the detection value of the exhaust temperature sensor 52 is the predetermined temperature or more, the ECU 100 stops (turns OFF) the glow plug 42 and controls the fuel injection nozzle 41 to be in a non-operating state and to stop the fuel injection.

If the heat spot members 50 and 51 are provided as in the case of the present embodiment, the burning of the heated gas is possibly accelerated to excessively increase a temperature of the exhaust purifying catalyst 34. However, by controlling the burner device 40 based upon the detection value of the exhaust temperature sensor 52 as described above, the excessive temperature increase of the exhaust purifying catalyst 34 can be prevented, finally realizing long life of the exhaust purifying catalyst 34.

It should be noted that an increase in the exhaust gas flow rate also can suppress the excessive temperature increase of the exhaust purifying catalyst 34. Therefore the exhaust gas flow rate may be controlled based upon the detection value of the exhaust temperature sensor 52. That is, when the detection value of the exhaust temperature sensor 52 is a predetermined temperature or more, the ECU 100 increases an opening degree of at least one of the throttle valve 14 and the EGR valve 19 to increase the exhaust gas flow rate more than in a case where the detection value is less than the predetermined temperature.

Although not illustrated, the downstream heat spot member 50 may be formed by the glow plug instead of the exhaust temperature sensor 52. In this case, even in a state where the glow plug is not energized, the heat portion of the glow plug can function as the heat spot member 50, and when the glow plug is energized, the ignition combustion of the heated gas can be more actively performed.

Next, an example of control applicable to the basic example, and the first to ninth modifications will be explained.

The heat spot members 50 and 51 are the higher in temperature as the heat receiving amount thereof is the larger, thereby realizing a high combustion accelerating effect. For increasing the heat receiving amount of the heat spot members 50 and 51, it is effective to reduce a flow rate of the exhaust gas colliding with the heat spot members 50 and 51.

Therefore preferably the ECU 100 reduces the exhaust gas flow rate upon operation of the burner device 40 more than upon non-operation thereof. Specially an opening degree of at least one of the throttle valve 14 and the EGR valve 19 is reduced to reduce the exhaust gas flow rate. Thereby the heat receiving amount of the heat spot members 50 and 51 can be increased to enhance the combustion accelerating effect.

Next, in a case where the burner device 40 and the heat spot members 50 and 51 are installed downstream of the turbocharger 8 as in the case of the present embodiment, there is a possibility that the heat accumulating function of the heat spot members 50 and 51 is deteriorated by an influence of the swirl flow generated with rotation of the turbine T. Particularly there is a possibility that the influence on the second heat spot member 51 installed immediately after the turbine is larger.

Therefore preferably the ECU 100 reduces the exhaust gas flow rate passing through the turbocharger 8 upon operation of the burner device 40. Specially the waist gate valve 21 is opened therefore. In this manner, the exhaust gas bypasses the turbine T and thereby the rotational speed of the turbine T is lowered to weaken the swirl flow. Therefore it is possible to suppress deterioration of the heat accumulating function of the heat spot members 50 and 51 due to the swirl flow.

In a case of a turbocharger equipped with a variable capacity type of turbine, it is likewise possible to weaken the swirl flow by increasing a nozzle vane opening degree.

The embodiment of the present invention is explained as above, but the present invention may adopt other embodiments. For example, an application, a type and the like of the internal combustion engine may be arbitrarily determined, and, not limited to the compression ignition type of internal combustion engine, a spark ignition type of internal combustion engine (gasoline engine) may be adopted. The first to ninth modifications may be combined as needed unless contradictory.

The embodiment of the present invention is not limited to the aforementioned embodiment, and all modifications and applications contained within the spirit of the present invention defined in the scope of claims, and its equivalents are included in the present invention. Therefore the present invention should not be interpreted in a limited manner and can be applied to other arbitrary technologies within the spirit of the present invention.

## Claims

1. An exhaust purifying apparatus for an internal combustion engine comprising:
an exhaust purifying catalyst provided in an exhaust passage in the internal combustion engine;
a burner device provided upstream of the exhaust purifying catalyst and generating a heated gas for heating the exhaust purifying catalyst, the burner device including at least a glow plug and a fuel injection nozzle injecting fuel toward the glow plug; and
a heat spot member as a heat accumulator provided downstream of the burner device and upstream of the exhaust purifying catalyst.

2. The exhaust purifying apparatus for the internal combustion engine according to claim 1, wherein the burner device further comprises a dispersing member provided downstream of the glow plug for dispersing the heated gas.

3. The exhaust purifying apparatus for the internal combustion engine according to claim 2, further comprising a second heat spot member as a second heat accumulator provided downstream of the glow plug and upstream of the dispersing member.

4. The exhaust purifying apparatus for the internal combustion engine according to claim 3, wherein a heat capacity of the heat spot member is smaller than that of the second heat spot member.

5. The exhaust purifying apparatus for the internal combustion engine according to claim 3 or 4, wherein the second heat spot member is arranged at such a position that fuel injected from the fuel injection nozzle is directly collided therewith.

6. The exhaust purifying apparatus for the internal combustion engine according to any of claims 3 to 5, wherein the second heat spot member is arranged in the vicinity of the glow plug such that emitted heat from the glow plug is transmitted thereto.

7. The exhaust purifying apparatus for the internal combustion engine according to any of claims 1 to 6, wherein the heat spot member comprises an exhaust temperature sensor, wherein at least one of the burner device and an exhaust gas flow rate is controlled based upon a detection value of the exhaust temperature sensor.

8. The exhaust purifying apparatus for the internal combustion engine according to any of claims 1 to 7, wherein the heat spot member comprises a glow plug.

9. The exhaust purifying apparatus for the internal combustion engine according to any of claims 1 to 8, further comprising exhaust flow rate reducing means for reducing an exhaust gas flow amount upon operation of the burner device.

10. The exhaust purifying apparatus for the internal combustion engine according to any of claims 1 to 9, further comprising a turbocharger provided upstream of the burner device, and turbo flow rate reducing means for reducing an exhaust gas flow rate passing through the turbocharger upon operation of the burner device.
